(19) Europäisches Patentamt
European Patent Office
Office européen des brevets

(11) **EP 3 626 845 A1**

(12) **EUROPEAN PATENT APPLICATION**

(43) Date of publication:
**25.03.2020 Bulletin 2020/13**

(21) Application number: **18196021.2**

(22) Date of filing: **21.09.2018**

(51) Int Cl.:
*C22C 1/04* (2006.01)    *H01M 4/02* (2006.01)
*H01M 4/24* (2006.01)    *H01M 4/26* (2006.01)
*H01M 4/38* (2006.01)    *H01M 10/34* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Höganäs AB (publ)
263 83 Höganäs (SE)**

(72) Inventors:
• **Shen, Yang
11416 Stockholm (SE)**
• **Noréus, Dag
13150 Saltsjö-Duvnäs (SE)**

(54) **METAL HYDRIDE ALLOY POWDER FOR NIMH BATTERIES HAVING IMPROVED PROPERTIES, METHOD FOR PREPARING THE SAME, AND NIMH BATTERY WITH IMPROVED PROPERTIES COMPRISING THE METAL HYDRIDE ALLOY POWDER**

(57) The invention concerns a method for improving the properties of metal hydride (MH) alloys for hydride batteries, in particular nickel-metal hydride (NiMH) batteries. It also concerns a MH alloy having improved properties that may be obtained from the method, as well as a NiMH battery having improved properties. The invention furthermore concerns the use of hydrogen peroxide for improving the properties of a MH alloy.

EP 3 626 845 A1

**Description**

**FIELD OF THE INVENTION**

The invention concerns a method for improving the properties of metal hydride (MH) alloys for hydride batteries, in particular nickel-metal hydride (NiMH) batteries. It also concerns a MH alloy having improved properties that may be obtained from the method, as well as a NiMH battery having improved properties. The invention furthermore concerns the use of hydrogen peroxide for improving the properties of a MH alloy.

**BACKGROUND OF THE INVENTION**

Nickel-metal hydride (NiMH) batteries are important power sources in electronic devices as well as hybrid electrical vehicles or fully electric (EV) vehicles. One drawback of NiMH batteries is their degradation and capacity loss over time, as well as poor low-temperature properties.

The cathode of a NiMH battery is formed of Nickel (II) hydroxide ($Ni(OH)_2$) and Nickel (III) oxide hydroxide (NiOOH), while the anode of a NiMH battery during discharge is commonly based on $A_xB_y$ alloys of different types that are able to store hydrogen in hydride form. One example is an $AB_5$ (e.g. $LaNi_5$) alloy, where A is selected from electropositive rare earth elements (e.g. La to Nd). B is predominantly Ni, but may partly be substituted by Co, Fe, Mn, Si, Mg and/or Al to improve hydrogen storage performance and corrosion stability. One example of an $AB_5$ alloy is $[La_{0.8}Nd_{0.2}][Ni_{2.5}Co_{2.4}Si_{0.1}]$. Other types of $A_xB_y$ alloys include $A_2B_7$, wherein A and B are as defined above. Further known are alloys of type $AB_2$. The present invention is concerned with the improvement of such hydrogen storage alloys, e.g. of type $AB_5$, $A_2B_7$ and $AB_2$, alloys, which are also referred to as MH alloys in the following.

A NiMH battery includes at least one anode, at least one cathode, and typically an aqueous alkaline electrolyte and a separator. Note that the anode upon discharge will become a cathode during charge, however, herein we will refer to the electrodes as they will function during discharge operation. During use, the anode alloy surface is corroded by the alkaline electrolyte used in the batteries during cycling. This reduces the capacity and consumes water in electrolyte. The corrosion also leads to evolution of hydrogen, which can be absorbed in the anode, however, this unbalances the electrodes capacities and results in an internal pressure increase when charging the battery. The activation process and the overcharge of the battery also contribute to the internal pressure increase. The high internal pressure makes the battery to vent through the safety valve accelerating its dry-out. This causes capacity decay and short cycle life.

That is, during the cycling of NiMH battery, corrosion consumes the alloy, but more important it reduces overcharge capacity by producing hydrogen:

$$Mm + 3\ H_2O \rightarrow Mm(OH)_3 + 3/2\ H_2$$

Herein, Mm denotes a Misch metal, or a mixture of rare earth elements such as La, Ce, Nd, Pr, etc. The Ni-electrode balance is shifted to higher hydrogen pressures. Increased contamination of hydrogen reduces the oxygen recombination kinetics. The reduction in overcharge capacity increases internal pressure, which leads to gas venting from the safety valve. Corrosion and venting consume the electrolyte, resulting in an inner resistance increase and the reduction in capacity of a sealed NiMH battery. Further, as derivable from the above formula, water is consumed, leading to dry-out of the electrolyte. These effects lead to aging of the battery and a reduction in cycle life.

There have been many attempts to improve the properties of MH powders prior to formation of the electrode, or even on the formed electrode. For instance, WO01/89009 A1 describes a treatment with hot KOH solution on a hydride/dehydrided (HDH) and oxidized (HDK) MH alloy powder, referred to as HAK method in this document and also in the following. The HAK method leads to magnetic properties of the $AB_5$ alloy and improves the discharge properties of an electrode prepared from the HAK-treated alloy powder in a half-cell test (discharge capacity vs. discharge current), showing higher discharge currents at identical remaining discharge capacities in comparison to only HDH- or HDK-treated materials (see Fig. 1 of WO 01/89009 A1). An earlier attempt to improve MH alloy powders is described in US 4,716,088.

However, these methods are relatively dangerous, complicated and require extra handling and storage processes to deal with highly flammable treated material. Further, the methods fail to deliver satisfactory low-temperature properties of the NiMH battery. Further, there is still desired an improvement in the cycle stability (avoidance of loss of capacity over use), i.e. a longer lifetime of the battery, and in the initial capacity of the battery. Also desired is an improvement in high discharge current applications, such as required for electric vehicles or hybrid vehicles.

Hydrogen peroxide is a widely used inexpensive and environmentally friendly oxidizing agent. In the field of NiMH batteries, hydrogen peroxide is described as component of the alkaline aqueous electrolyte, as described in K. Young et al., Int. J. Hydrogen Energy, Volume 37, Issue 12, 2012, Pages 9882-9891. However, only part of metal hydride contents will be oxidized, and hydrogen peroxide might also oxidize the cathode material or the separator.

**PROBLEMS TO BE SOLVED BY THE PRESENT INVENTION**

The present invention aims at providing a method for improving the properties of a MH alloy powder, as well as an improved MH alloy powder, addressing one or more of the problems and drawbacks of the prior art.
The problems addressed by the present method for treating an MH alloy for a NiMH battery, as well as by the MH alloy of the present invention, include the following:

-   Increasing initial capacity and/or long-term capacity,
-   Improving electrochemical stability over many cycles (improving lifetime),
-   Improving low-temperature performance,
-   Improving performance at high discharge currents (lowering polarization at high discharge currents and, thus, also improving lifetime under such conditions),
-   Improving safety during preparation and handling, and
-   Improving cost-efficiency and/or time-efficiency of preparation.

**SUMMARY OF THE INVENTION**

The present inventors have found that at least one of the above problems, and preferably some or all of the above problems, can be solved by treating a MH alloy powder suitable for use as an anode of a NiMH battery with aqueous hydrogen peroxide solution.
The present invention thus provides the following

1. A method for treating a hydrogen storage alloy powder for a negative electrode of a rechargeable NiMH battery, comprising

   A. optionally performing two or more cycles of a hydriding treatment to form a hydrided hydrogen-treated hydrogen storage alloy powder;

   B. optionally partially oxidizing the hydrided hydrogen-treated hydrogen storage alloy powder obtained after the two or more cycles of step A using an oxidizing agent;

   C. treating a hydrogen storage alloy powder, the hydrided hydrogen storage alloy powder obtained after the two or more cycles of hydriding treatment of step A or the partially oxidized hydrided hydrogen storage alloy powder obtained after step B with an aqueous solution containing hydrogen peroxide.

2. The method for treating a hydrogen storage alloy powder according to embodiment 1, wherein the hydrogen alloy powder contains nickel and optionally cobalt.

3. The method for treating a hydrogen storage alloy powder according to embodiment 1 or embodiment 2, wherein the hydrogen storage alloy powder is selected from the types AB2, $AB_5$ and $A_2B_7$.

4. The method for treating an hydrogen storage alloy powder according to any one of embodiments 1 to 3, wherein the temperature of one or more of the two or more hydriding cycles of step A is 80°C or higher, such as 100°C or higher or 130°C or higher, preferably 150°C or higher, and/or wherein $P_{H_2}$ is $10^5$ Pa or higher, such as 5 x $10^5$ Pa or higher or $10^6$ Pa or higher.

5. The method for treating a hydrogen storage alloy powder according to any one of embodiments 1 to 4, wherein the optional steps A and B are conducted, and wherein preferably the oxidizing agent used in step B comprises molecular oxygen, and is more preferably air.

6. The method for treating an hydrogen storage alloy powder according to any one of embodiments 1 to 5, wherein the aqueous solution of hydrogen peroxide used in step C has a hydrogen peroxide concentration of 35 wt.-% by weight or less, preferably 25 wt.-% or less, more preferably 20 wt.-% or less, but 1 wt.-% or more, preferably 2 wt.-% or more, more preferably 3 wt.-% or more.

7. The method for treating a hydrogen storage alloy powder according to any one of embodiments 1 to 6, which further comprises a milling step that is conducted prior to step C, and preferably prior to step A if step A is conducted or if steps A and B are conducted.

8. A hydrogen storage alloy having a discharge capacity of 150 mAh/g or more at a discharge current of 300 mA/g at -20°C.

9. A Nickel-Metal Hydride (NiMH) secondary battery cell having an electrode made from a composition comprising a hydrogen storage alloy according to embodiment 8 or a hydrogen storage alloy powder obtainable by a method according to any one of embodiments 1 to 7.

10. The NiMH secondary battery cell according to embodiment 9, which includes two electrodes, one of the electrodes being made from a composition comprising a hydrogen storage alloy according to embodiment 8 or a hydrogen storage alloy powder obtainable by a method according to any one of embodiments 1 to 7, a separator and an electrolyte, wherein the electrolyte is an aqueous alkaline solution comprising KOH and optionally LiOH and/or NaOH.

11. The NiMH secondary battery cell according to any one of embodiments 9 and 10, which has an n/p ratio of 1.05 - 2.2, preferably 1.4 - 2.2, and more preferably 1.8 - 2.2, wherein n denotes the capacity of the negative electrode and p denotes the capacity of the positive electrode.

12. An NiMH secondary battery cell having a discharge capacity of 290 mAh or higher at a discharge current of 600 mA/g.

13. The NiMH secondary battery cell according to embodiment 12, which is a NiMH secondary battery cell as defined in any one of embodiments 9 to 11.

14. A NiMH secondary battery containing several NiMH secondary battery cells as defined in any one of embodiments 9 to 13.

15. Use of the NiMH secondary battery according to embodiment 14 in a full electrical vehicle, hybrid electrical vehicle or in stationary storage.

## BRIEF DESCRIPTION OF THE DRAWINGS

Fig. 1 is a sketch showing the assumed differences in structure between a material obtained by a process in accordance with the present invention and a material obtained according to a HAK treatment of the prior art.

Fig. 2 is a graphical representation of the results of half-cell tests at different temperatures for reference material (HAK) (top, Figure 2a), and a comparison of reference material (HAK) and inventive material at -20°C (bottom, Figure 2b)

Fig. 3 is a graph showing a comparison of discharge potential and cycling stability of the hydrogen storage alloy of the present invention vs. an untreated material and a HAK treated material.

## DEFINITIONS

In the present invention, all parameters and product properties relate to those measured under standard conditions (25°C, $10^5$ Pa) unless stated otherwise.

All physical parameters can be determined by standard methods in the art and/or the following detailed description. In case of discrepancy between a standard method and a method described below, the present description prevails.

The term "comprising" is used in an open-ended manner and allows for the presence of additional components or steps. It however also includes the more restrictive meanings "consisting essentially of" and "consisting of".

Whenever a range is expressed as "from x to y", or the synonymous expression "x - y", the end points of the range (i.e. the value x and the value y) are included. The range is thus synonymous with the expression "x or higher, but y or lower".

As used herein, the indefinite article "a" indicates one as well as more than one and does not necessarily limit its reference noun to the singular.

The term "about" means that the amount or value in question may be the specific value designated or some other value in its neighborhood, generally within a range of ±5% of the indicated value. As such, for instance the phrase "about 100" denotes a range of 100 ±5.

The term and/or means that either all or only one of the elements indicated is present. For instance, "a and/or b" denotes "only a", or "only b", or "a and b together". In the case of "only a" the term also covers the possibility that b is absent, i.e. "only a, but not b".

**DETAILED DESCRIPTION OF THE INVENTION**

The present inventors have surprisingly found that some or all of the above objects can be attained by treating an MH alloy with hydrogen peroxide ($H_2O_2$), typically aqueous $H_2O_2$. Without wishing to be bound by theory, it is believed that the $H_2O_2$ treatment leads to the formation of a relatively thick oxide layer, containing catalytic active nano-particles of e.g. nickel and/or cobalt, on the surface of the storage alloy powder particles, which however is sufficiently porous in order to not impair the accessibility or the electrochemical properties.

The method for treating a hydrogen storage alloy powder for a negative electrode of a rechargeable NiMH battery of the present invention comprises the following step C, and optionally the steps A and/or B:

A. optionally performing two or more cycles of a hydriding treatment to form a hydrided hydrogen storage alloy powder;

B. optionally partially oxidizing the hydrided hydrogen storage alloy powder obtained after the two or more cycles of step A;

C. treating a hydrogen storage alloy powder, the hydrided hydrogen storage alloy powder obtained after the two or more cycles of hydriding treatment of step A or the partially oxidized hydrided hydrogen storage alloy powder obtained after step B with an aqueous solution containing hydrogen peroxide.

The starting material for the method of the present invention (i.e. step C, or step A, if steps A and B are conducted) is a hydrogen storage alloy of known type, and is preferably an alloy that contains Co and/or Ni. The alloy may be of the type $AB_5$ and $AB_2$, preferably $AB_5$. Included are also alloys having an alternate layers of $AB_2$ and $AB_5$ as described by D. G. Westlake with reference to Dunlap et al. in J. of the Less Common Metals, 91 (1983) 1-20, such as in $AB_3$, $A_2B_7$, $A_2B_9$, $A_2B_{17}$ etc., most preferred is the alloy $A_2B_7$. In the present invention, the alloy type $AB_5$ includes those having a deviating stoichiometry $AB_y$, where y is from 4.5 to 5.4, as described for instance by Wang et al. in Chem. Eng. J. 352 (2018) 325-332 and J. Power Sources 398 (2018) 42-48. Similar deviation from ideal stoichiometry may occur also for the $AB_2$ and $A_2B_7$ alloys, so that in one embodiment the $AB_2$ alloys may have a stoichiometry in the range of $AB_{1.8-2.2}$, and in the $A_2B_7$ alloys, the stoichiometry may be $A_2B_{6.6-7.4}$. In case the alloy contains Co and/or Ni, the total amount of Co and Ni is preferably 50 mol% or more, such as 75 mol% or more, 85 mol% or more, or even 90 mol% or more, of the elements forming **B** in the above alloys, e.g. $AB_5$ and $A_2B_7$.

These alloys combine a hydride forming metal **A**, usually selected from the group consisting of rare earth metals, preferably selected from the group of lanthanides consisting of La, Ce, Nd, Pr, etc, but also selected from Y, Zr or Ti, or their mixture with a non-hydride forming element **B**, which is typically nickel. The latter can be doped with or partially replaced by other metals, such as Co, Mn, Fe, V, Cr, Si, Ca, Sc, Mg or Al, e.g. to a degree of up to 30%, to improve materials stability or to adjust equilibrium hydrogen pressure and temperature required for its charging discharging with hydrogen, as well known in the art.

In the alloys of the above type $AB_5$ (including $AB_y$) and $A_2B_7$, **A** is preferably selected from La, Nd, Ce, Pr, and Y, and mixtures thereof, such as a mixture of La and/or Ce with Y. In a further preferred embodiment, **A** is a mixture of at least one of La and Ce with at least one of Nd, Y and Zr, and herein the at least one of La and Ce forms 50 mol% or more of the elements forming A. In this embodiment, the at least one of La and Ce may consist of La or Ce only, but also encompasses the possibility that both are present. In the latter case, the amount of La preferably exceeds that of Ce, and the molar ratio of La to Ce (La/Ce) may be 1 or higher, such as 1.5 to 5.

For $AB_5$- and $A_2B_7$-alloys, **B** may be formed by Ni only, but the Ni may partly be substituted by Co, Fe, Mn, Si, and/or Al to improve e.g. hydrogen storage performance and corrosion stability. In this case, Ni typically forms 50 mol% or more of **B**, such as 60 mol% or more, 70 mol% or more or 80 mol% or more, the remainder being selected from Co, Fe, Mn, Si, Al, Mg and mixtures thereof. One example of an $AB_5$ alloy is $[La_{0.8}Nd_{0.2}][Ni_{2.5}Co_{2.4}Si_{0.1}]$.

In the alloys of AB2 type, embodiments of A include Zr, V and Ti, but may also include La, Nd, Ce, Pr, and Y and mixtures thereof, and embodiments of **B** include besides Ni also Cr, Co, Fe, Mn, Si, Al, Mg, Ca and Sc.

A preferred alloy for use in the present invention is of $A_2B_7$ or $AB_5$ type, preferably $AB_5$ type (including $AB_y$) wherein **A** includes La and **B** includes Ni and optionally yet preferably Co. Specific Examples include $La_2Co_1Ni_9$, $LaNi_5$,

(Ce, La, Nd, Pr) $Ni_5$, $YNi_5$, (La, Ce, Pr, Nd) (Al, Mn, Co, Ni)$_5$, with (La, Ce, Pr, Nd) (Al, Mn, Co, Ni)$_5$ being a preferred example. A preferred $A_2B_7$ alloy can be (La, Ce, Nd, Pr)$_2$(Ni, Mg, Al)$_7$ obtainable from e.g. Japan Metals and Chemicals, Co.,Ltd. Further information on suitable alloys can be found in Battery Technology Handbook, 2nd Ed., Ed.: H.A.Kiehne, Expert Verlag GmbH, Renningen-Malsheim, Germany, 2003.

Each of these steps will be discussed below.

Essential Step C:

The step C is a step in which any hydrogen storage alloy powder, e.g. as commercially available, a hydrided hydrogen storage alloy powder obtained after step A, or a partially oxidized hydrided hydrogen storage powder obtained after step B (and A, as the starting material for step B is the material resulting from step A), is treated with hydrogen peroxide, typically an aqueous solution of hydrogen peroxide. The starting material for step C is preferably a material that has been subjected to the steps A and B, in this order, yet depending on the type of material, one or both of these steps A and B may also be omitted. In either case, it is preferable that the starting material for step C is a hydrogen storage alloy that has been properly conditioned, in particular hydrided, e.g. by performing step A or steps A and B.

The treatment with $H_2O_2$ of step C leads to the formation of an oxide layer on the hydrogen storage alloy, as will be described later. The formation of the oxide layer is influenced by both the concentration of $H_2O_2$ and the duration of the $H_2O_2$ treatment, and a lower concentration of $H_2O_2$ can at least be partly compensated by longer duration. The concentration of $H_2O_2$ and the duration of the $H_2O_2$ treatment can be determined by a skilled person by performing few orienting tests. The treatment can be performed at any suitable temperature, but in order to avoid a too vigorous reaction, the treatment is preferably performed 25 °C or less. In practice, performing the treatment preferably at from 15 to 25°C, more preferably from 20 - 25°C has been found suitable to achieve a proper balance between reaction speed and avoiding a too vigorous reaction.

The concentration of $H_2O_2$ in an aqueous solution is typically 35 wt.-% by weight or less, preferably 25 wt.-% or less, more preferably 20 wt.-% or less, but 1 wt.-% or more, preferably 2 wt.-% or more, more preferably 3 wt.-% or more.

The duration of the $H_2O_2$ treatment of step C is typically 5 seconds or longer, preferably 10 seconds or longer, more preferably 20 seconds or longer, such as 30 seconds. These times are in particular sufficient if a more concentrated $H_2O_2$ solution is used, such as one having a concentration of 10 wt.-% or more.

The maximum duration of the $H_2O_2$ treatment of step C is not particularly limited, but is typically 5 minutes or less, preferably 2 minutes or less, such as 1 minute or less. The optimum duration for a given $H_2O_2$ concentration can be determined by routine tests, such as described in Example 1 of the present invention. A combination that has been shown to lead to good results in practice is a treatment with 10 - 20 wt.-% $H_2O_2$ solution for 20 to 40 seconds, in particular for $AB_5$ and $A_2B_7$ alloys. AB2 alloys may require slightly higher concentrations of $H_2O_2$ solution and/or longer treatment times.

A typical procedure for performing the $H_2O_2$ treatment is as follows:
The $H_2O_2$-solution is poured into the alloy powder until the powder bed is completely covered with the solution. Thereafter a mechanical stirring is immediately started until the desired time had elapsed. Thereafter the solution is diluted with excess (>10 times compared with the $H_2O_2$-solution) of deionized water in order to quickly terminate the reaction. Termination may also be effected by filtration, followed by washing with deionized water. Lastly, the wet powder is dried under vacuum over night at about 100°C.

Optional Steps A and B

Steps A and B are optional steps, yet are typically conducted in order to pre-condition the material for the subsequent $H_2O_2$ treatment step C. The steps are as such known and for instance described in WO 01/89009.

In step A, the alloy is hydrided and dehydrided by contacting the hydrogen storage alloy powder with hydrogen under pressure and typically elevated temperature in order to facilitate decrepitation, a process where coarse alloy particles break up into smaller fractions. The hydriding/dehydriding may be performed in a closed container in the presence of hydrogen gas, which may or may not contain other inert gases. In a typical hydriding/dehydriding treatment, the hydrogen storage alloy powder is put under a hydrogen atmosphere of 10-100 bar hydrogen (partial pressure of hydrogen in case other gases are present), such as 20 to 80 bar, preferably in an environment having a temperature of 80°C or higher. The temperature of the environment may also be 90 °C or higher, such as 100°C or higher or 110 °C or higher, but should generally not exceed 200 °C. The material is kept in this state until the pressure and temperature stabilize, and then the pressure is released, typically to ambient pressure, to partially dehydride the material. The resulting material is a "hydrided hydrogen storage alloy" in the terms of the present invention. This hydriding/dehydriding cycle (i.e. increasing hydrogen pressure to 10 - 100 bar and releasing pressure at elevated temperature) is repeated several times, such as 2 - 20 times, and typically 3 - 15 times, such as 5-10 times, in order to obtain a suitably conditioned hydrogen storage alloy powder. It needs to be noted that higher temperatures increase the kinetics of the adsorption/desorption of hydrogen, so that the reaction proceeds faster. Yet, at higher temperatures, also the pressure of hydrogen needs to be very high in order to incorporate acceptable amounts of hydrogen. At lower temperatures, the alloys can contain more hydrogen and lower hydrogen pressures may be used, yet the reaction proceeds slower. For example, a sufficient conditioning can be achieved by 4 or 5 cycles at an environment temperature of 150°C.

During the hydriding/dehydriding, the decrepitation occurring causes new and fresh surfaces to be exposed, thus, hydrogen can more and more easily/quickly be adsorbed. When the drop in hydrogen-pressure does no longer increase with cycling, the decrepitating process is finished. In the presence of Co, the crystal structure appears to be more ductile, which prevents the formation of very small particle sizes that in turn would expose a *too* high surface area. It is believed that this is the main reason why Co works as a corrosion stabilizer. However, less Co is desired due to cost and health reasons. As such, the amount of Co in the alloy treated in the present invention is typically 10% by weight or less (relative to the total weight of the alloy), such as 8% by weight or less or 6% by weight or less. The lower limit can be 0% (i.e. Co is absent), but can also be 1% by weight or more, such as 2% by weight or more.

A pre-conditioned powder for step C may be achieved by milling an alloy powder, preferably in hydrided state, into the particle size range that is obtained after step A, as will be described below. In addition, milling prior to step A is believed to accelerate the hydrogen adsorption kinetics. Further, by starting with a stable particle size, it is believed that the formation of a corrosion layer is completed during step C and, thus avoided during the subsequent electrochemical cycling inside the cell.

The material as obtained after the hydriding/dehydriding could be used as a starting material for step C. However, it is noteworthy that the hydrided/dehydrided material (also referred to as HDR) is highly reactive, flammable and corrosive, and that its reaction with $H_2O_2$ may be very vigorous. It is therefore preferred to slightly oxidize the HDR-treated material in step B, in which the material is brought into contact with an oxygen-containing gas, preferably air. This can elegantly be performed by slowly introducing the gas, e.g. air, into the container in which the HDR treatment was previously performed, after the material has been cooled to a temperature where the reaction is not too vigorous, e.g. room temperature (20 °C). Also, a diluted gas (containing e.g. 2% oxygen, remainder inert gas such as nitrogen) may be used to flush the container in which the HDR-treated material is present, followed by evacuation, and again flushing with diluted gas. This can be continued until no pressure drop of the flushed container is observed, indicating that the reaction with oxygen is complete. Alternatively, the HDR-treated powder of step A may be quickly cooled (using e.g. liquid nitrogen) and then placed outside the reactor in contact with ambient air, where it is slowly heated up, and thus subject to a slow oxidation process.

The oxidized material obtained from step B can then be handled under air, which facilitates the manufacturing process. The material after hydriding-dehydriding (HDR) and oxidation as described above is referred to as HDR-OX.

The material resulting from the process including step C, which is one embodiment of the hydrogen storage alloy of the present invention, is superior to untreated material and HAK treated material, as will be explained further below. Yet, also the process of the present invention is superior over the conventional HAK treatment, as the procedure with $H_2O_2$ can be performed at room temperature, whereas the HAK treatment requires hot alkaline solutions. The procedure with $H_2O_2$ is also fast and requires less hazardous chemicals and handling operation, so that it is also favorable from an industrial point of view.

Optional Milling Step

The method of the present invention may further include a milling step for reducing the particle size of the alloy, which increases the surface area and may thus provide improved properties of the hydrogen storage alloy, including facilitating the ease of hydriding/dehydriding or the performance properties of a battery containing the hydrogen storage alloy. The milling may be conducted under suitable conditions, e.g. under inert gas and room temperature, and conventional equipment such as a ball mill or a jet mill may be used.

If performed, the milling step is conducted prior to step C. If step A is conducted, the milling may be performed between steps A and C, but is preferably performed prior to step A. If steps A and B are performed, the milling step may be performed prior to step A, between steps A and B, or between steps B and C. The method may also include only the milling step and the subsequent step C. The milling step is preferably conducted, and is then preferably performed to achieve an average particle diameter of 20μm or less. At least for AB5-type alloys the preferred average particle size is 15μm or less, or more preferably 10μm or less, however, the average particle size should be kept larger than 0.5μm. preferably larger than 1μm, more preferably larger than 2μm. In other means, the average particle size should be controlled to the size range where normally the alloy powder reaches after substantial electrochemical cycling in a battery, or to the average particle range attainable after performing the treatment of step A, which is for example between 1 and 20μm, preferably between 2 and 15μm, or more preferably between 2 and 10μm. The preferred average particle size range is highly dependent on the alloy composition.

The Hydrogen Storage Alloy of the present invention

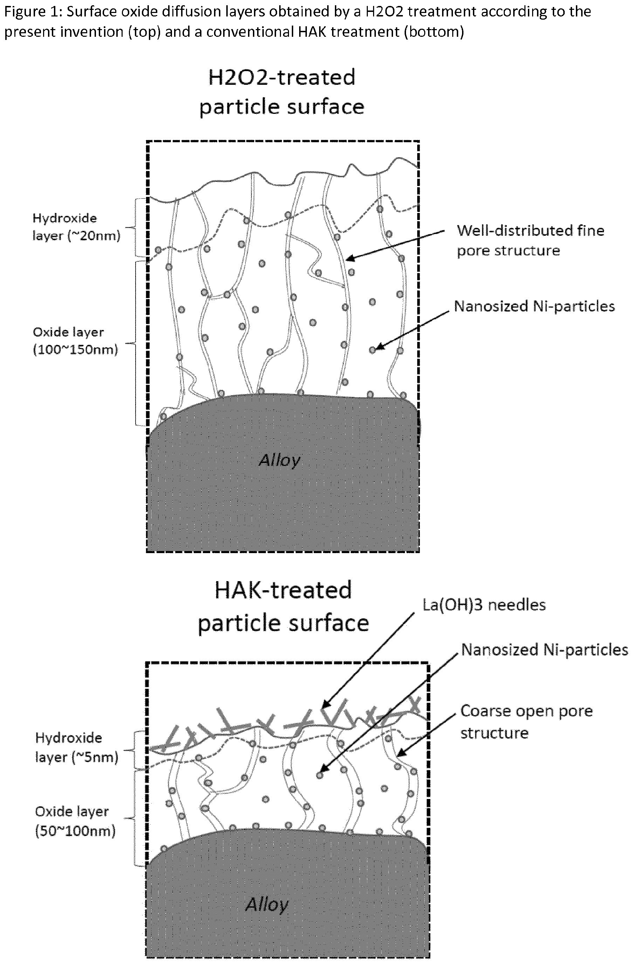

Performing the essential step C leads to the formation of a relatively thick oxide diffusion layer as compared to the oxide diffusion layer formed by a conventional HAK treatment, as derivable from an elemental depth profiling performed using a combination of XPS and Ar-ion sputtering. The results are summarized in the following Table 1 and graphically illustrated in Figure 1 (Note: the material investigated is the "Alloy1" as described in the following Examples) :

**Table 1. Depth profiling using XPS-analysis combined with Ar-ion sputtering**

|  | $La(OH)_3$ to $La_2O_3$ | $La_2O_3$ to La | $Ni(OH)_2$ to Ni | $Co(OH)_3$ to Co |
|---|---|---|---|---|
| HDR-OX (reference) | 1~3nm | 20~50nm | 5nm | 5nm |
| HDR-OX-H2O2 (invention) | 5~10nm | 100~150nm | 20nm | 20nm |
| HDR-OX-KOH (comparative) | 1~3nm | 50~100nm | 5nm | 5nm |

Chemical state analysis, compositional depth profiling and coating thickness determination were carried out using XPS on the surface modified powders. The powder was mounted on a double-sided adhesive conductive carbon tape. Measurements were performed using a PHI 5500 XPS (PERKIN ELMER, Eden Prairie, Minnesota, USA) having a monochromatic Al K$\alpha$ (1486.6 eV) X-ray source. The analyzed area under X-ray irradiation was approximately 800 $\mu$m in diameter, gathering information from more than 100 particles, thus yielding an acceptable statistical result for each measurement. The operating pressure in the ultra-high vacuum measuring chamber was about $1 \times 10^{-12}$bar. The photoelectron emission angle measured with respect to the normal of the surface was 45°, while the pass energy was set at 93.9 eV with a 0.4 eV/step for the survey spectra (in the range of 0-1100 eV) and 23.5 eV with a 0.1 eV/step for high resolution scans (i.e. selected narrow binding energy regions from the survey scan that correspond to the elements of interest). Deconvolution of the emitted signals was carried out through curve fitting of characteristic elemental peaks using the PHI MULTIPACK software (PERKIN ELMER, Eden Prairie, Minnesota, USA). Because of the nonconductive nature of the powder coating, charging effects were observed in the XPS measurements. Those effects were confronted by both adding slow electrons to the vacuum space with a neutralizer and by using software correction. The C1s line (~284.6 eV) was used as a reference value for the charge compensation during the analysis.

In order to acquire a compositional depth profile and determine the thickness of the insulating coating, successive sputtering steps were carried out using argon ion gun at 4 kV acceleration voltage over an area of 3 mm $\times$ 4 mm. The ion incidence angle in respect to the sample surface was measured at 50.5°. Furthermore, the etch rate of the sputtering process was estimated at 5 nm min-1 for a flat sample of oxidized tantalum foil (Ta2O5) of known oxide thickness (100 nm). A relationship between the relative sputter rate of Ta2O5 in respect to various oxide compounds was done elsewhere [D.R. Baer, M.H. Engelhard, A.S. Lea, P. Nachimuthu, T.C. Droubay, J. Kim, B. Lee,C. Mathews, R.L. Opila, L.V. Saraf, W.F. Stickle, R.M. Wallace, B.S. Wright, J. Vac.Sci. Technol. A 28 (2010) 1060-1072.].

The results illustrate that for a material that has only been hydrided-dehydrided and slightly oxidized (steps A and B only, HDR-OX), an oxide layer (as represented by the depth in which the signal changes from $La_2O_3$ to La) is about 20 - 50 nm thick. A conventional HAK (i.e. HDR-OX-KOH) treatment forms an oxide layer that is about 50 - 100 nm thick, whereas the $H_2O_2$treatment according to the present invention (step C) on an HDR-OX material leads to the formation of an oxide layer that is about 100 - 150 nm thick. Accordingly, the hydrogen storage alloy of the present invention has in one embodiment an oxide layer of 100 nm or greater, preferably 100 to 150 nm, as determined by elemental depth profiling performed using a combination of XPS and Ar-ion sputtering and expressed by the depth in which a transition from $La_2O_3$ to La (or other A-oxide in the hydrogen storage alloy represented by $AB_5$, AB2, or $A_2B_7$) is observed.

This difference in structure is also apparent from the thickness of the hydroxide layer, as represented by the change of the signal from $Ni(OH)_2$ to Ni. The HAK treatment has no apparent effect on this hydroxide layer (thickness = 5 nm for both the reference material before HAK or $H_2O_2$treatment, and the HAK treated-material), yet the $H_2O_2$treatment of the present invention leads to the formation of a hydroxide layer of about 20 nm thickness. The same is observed for the change in signal from $Co(OH)_3$ to Co. The hydrogen storage alloy of the present invention, thus, has in one embodiment a nickel hydroxide layer of 10 nm or greater, preferably 15 nm or greater, such as 20 nm or greater, as determined by elemental depth profiling performed using a combination of XPS and Ar-ion sputtering and expressed by the depth in which a transition of $Ni(OH)_3$ to Ni is observed.

Noteworthy, the specific surface area (as determined by the BET-method) of the improved hydrogen storage alloy of the invention and that obtained by the conventional HAK treatment is similar. It is thus assumed that the oxide layer, as created by the $H_2O_2$treatment, leads to fine and well distributed pores, while he HAK treatment causes a thin but dense layer including relatively coarse and open pores.

Surprisingly, in spite of having a thicker oxide and hydroxide layer, the hydrogen storage alloy of the present invention excels the electrochemical performance of the HAK treated material. It is believed that this is due to the well-ordered nanosized porous structure including Ni-nanoparticles (see Figure 1), which allows proper and fast diffusion and reaction of the electrolyte. This in turn avoids the formation of $H_2$ or $O_2$ from $H_2O$, as $H_2O$ is split into $H^+$ and $OH^-$ on the catalytic Ni surface instead. This hence prevents dry-out of the battery, thereby also improving cycle life.

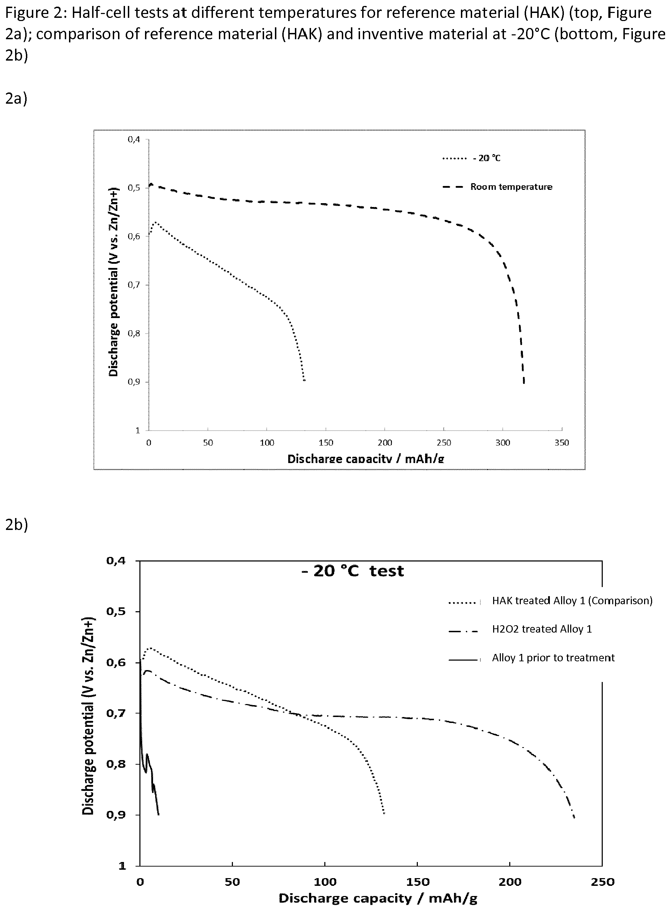

It was further found that very surprisingly, the treated/improved hydrogen storage alloy of the present invention has significantly improved electrochemical properties, in particular capacity, at low temperatures, such as -20 °C. In fact, cells fabricated with unmodified powder show no activity at all at this operating temperature. Also, the capacity at -20°C is superior to that of HAK treated material, as derivable from Figure 2. While the reason for this is not fully clear, and without wishing to be bound by theory, it is believed this is maybe a consequence of the increased presence of magnetic Ni-nanoparticles/clusters adjacent to the non-oxidized alloy. Nanoparticles may require lower activation energy to initiate catalytic reactions, which could explain an enhanced activity at lower temperatures.

As shown in Figure 2a (top), a conventional material (here: HAK-treated Alloy 1, as referred to in Example 1) shows good behavior at room temperature. The potential shows a plateau up to a discharge capacity of almost 300 mAh/g at a current of 300 mA/g, i.e. until the material is almost fully discharged. Strikingly, at a low temperature of -20°C, the discharge potential curve falls very quickly, and the discharge capacity is only about 130 - 140 mAh/g at a current of 300 mA/g. This shows that a battery including a conventional HAK material will not be able to operate stably (i.e. with a plateau of the discharge potential over a substantial part of the discharge) at low temperatures, and the capacity will only be around 40 - 50 % of the capacity at room temperature.

Conversely, as illustrated in Figure 2 b) comparing the discharge characteristics of conventional HAK materials and the hydrogen storage alloy for the present invention, the hydrogen storage alloy of the present invention, as obtainable by the method of the invention, shows more of a plateau at low temperature of -20°C, and also keeps this plateau up to a discharge capacity of about 180 - 200 mAh/g at a current of 300 mA/g. The potential drops to low values only at a discharge capacity of more than 200 mAh/g, where the conventional HAK alloy only achieves around 130 mAh/g. The hydrogen storage alloy of the present invention thus can exhibit a capacity of 150 mAh/g (and up to 230 mAh/g) at a temperature of -20°C and a current of 300 mA/g, which is unheard of for existing hydrogen storage alloys. Notably, a non-treated hydrogen storage alloy shows almost no capacity at such low temperatures.

A NiMH battery including an anode made from the hydrogen storage alloy of the present invention, thus, has a far greater capacity at low temperatures as compared to a battery having a non-modified or HAK-treated hydrogen storage alloy anode, and exhibits much better operation properties in view of the relatively stable potential over the course of discharge. The discharge capacity at -20°C is about 230 mAh/g at a current of 300 mA/g in Figure 2b, which corresponds to about 70% of the capacity at room temperature. This represents a significant improvement over HAK treated materials, in particular when the battery is used in electric or hybrid vehicles that need to maintain their operability and range even under cold conditions, or in stationary storage for e.g. wind or solar energy, which also need to provide sufficient storage capacity and sufficient discharge capacity even at low temperatures.

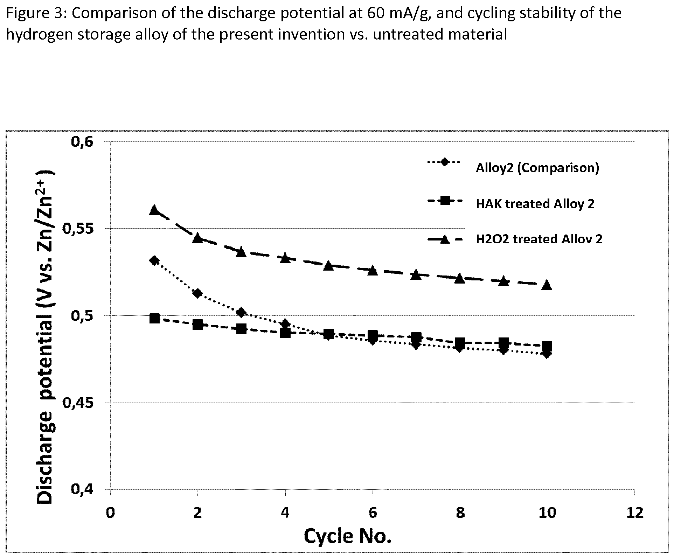

The hydrogen storage alloy of the present invention furthermore shows a high capacity for more cycles and a longer time, which increases the lifetime of the battery. This is illustrated in Figure 3, where a comparison of the discharge potentials between an untreated hydrogen storage alloy (Alloy 2 as defined below in Example 2), the respective HAK-treated material and an hydrogen peroxide treated hydrogen storage alloy according to the present invention are shown. The $H_2O_2$ treated alloy according to the present invention shows improved cycle stability and thus has a longer lifetime. Without wishing to be bound by theory, it is assumed that the surface modification by $H_2O_2$ provides a more stable oxide layer that prevents further (or excessive) corrosion during cycling. Thus, the favorable oxide layer may inhibit an increase of the internal resistance. High resistance may cause polarization, which increases the parasitic reactions and energy loss in the cell, which in turn limits the battery performance. The parasitic reactions include electrode material corrosion and water splitting (consumes water and depletes electrolyte), which are detrimental for the lifetime of the cell and battery. Thus, a higher discharge potential is an indication of lower polarization losses that in turn can improve the overall lifetime performance.

Further, the hydrogen storage alloy of the present invention shows a higher initial discharge capacity as compared to the untreated hydrogen storage alloy, thereby also allowing a quicker and more cost-effective manufacture of a battery. An additional advantage is that the hydrogen storage alloy of the present invention can also be discharged (and charged) quicker than conventional materials, and is thus very suitable for application having a high demand of power, such as electric vehicles, power tools, etc.

An additional advantage of the hydrogen storage alloy of the present invention is that it is stable in air and can be handled without the risk of pyrophoric burns. Without wishing to be bound by theory, it is believed that this effect is caused by the thicker oxide/hydroxide layer. This represents an advantage over HAK treated alloys, which are associated with the risk of pyrophoric burns and are thus more difficult to handle.

The hydrogen storage alloy of the present invention is preferably obtained by the method for treating a hydrogen storage alloy powder for a negative electrode of a rechargeable NiMH battery of the present invention. Yet, the hydrogen storage alloy of the present invention is not limited to that obtained by the process, as long as it has a discharge capacity of 150 mAh/g or more at -20°C and a current of 300 mA/g, e.g. under the conditions employed in the Examples.

NiMH Battery Cell and NiMH battery

The present invention further relates to a NiMH battery cell having an electrode made from a composition comprising a hydrogen storage alloy of the present invention, which is typically obtainable by performing the method of the present invention.

As will be demonstrated in the Examples below, the hydrogen storage alloy of the present invention allows realizing very high discharge capacities at high discharge currents. Due to these unique properties of the hydrogen storage alloy of the present invention, the battery cell of the present invention can exhibit a discharge capacity of 290 mAh/g of alloy or higher at a discharge current of 600 mA/g. This distinguishes the battery cell from those of the prior art, as obtained e.g. by employing a battery cell having an electrode made from a material that was subjected to the HAK treatment.

Preferably, the n/p ratio (wherein n denotes the capacity of the negative electrode and p denotes the capacity of the positive electrode) of the battery cell is preferably 1.05 - 2.2, further preferably 1.4 - 2.2, and more preferably 1.8 - 2.2, as such a ratio is considered to be beneficial for high discharge currents.

The present invention further relates to a battery comprising one or more battery cells of the present invention, as described above.

## EXAMPLES

The present invention will be illustrated by the following specific examples, which are however not intended to limit the invention in any way. It will be apparent to one skilled in the art that various modifications to the Examples can be made without departing from the scope of the present invention, as defined by the claims and properly construed by law.

## EXAMPLE 1

An $AB_5$ type alloy $La_{18} Ce_{10} Pr_1 Nd_3 Al_2 Mn_5 Co_{10} Ni_{51}$ was supplied by Santuko (herein referred to as "Alloy 1"). The indices refer to weight percent. The alloy powder placed in a Zirconia (YSZ) tube contained in a stainless steel autoclave was flushed by hydrogen under room temperature a few times to remove air. The alloy powder was then heated under 50 bar hydrogen pressure to 180 °C and kept at this temperature for 20 minutes, thereafter the hydrogen pressure was released to ambient pressure. Then the hydrogen pressure was increased to 50 bars again to hydride the alloy powder for 20 minutes. This procedure was repeated 10 times to achieve a fully decrepitated and hydrided alloy powder (step A). In order to reduce the risk of igniting the hydrided powder, after removing the hydrogen gas, air was added to the tube to slightly oxidize the alloy after cooling the autoclave to room temperature (step B), thereby obtaining the alloy powder B1.

Parts of the alloy powder was then washed (step C) by 30% hydrogen peroxide for 30 seconds (A1), 15% hydrogen peroxide for 30 seconds (A2) and 7.5% hydrogen peroxide for 30 seconds (A3), respectively. Thereafter each powder was washed with deionized water and dried in vacuum.

Half-cell tests

The electrochemical properties of treated alloy were measured in a half-cell test with a Lanhe CT2001A (Land) battery testing instrument. The working electrodes were made by mixing 0.25 g of the respective $H_2O_2$-treated alloys A1, A2 and A3, respectively, as prepared in Example 1, and 0.75 g nickel powder. The comparative working electrode was made by mixing 0.25g of Alloy 1 without any treatment.

The mixture was compacted in a pressing tool with 1 cm diameter to a pellet at a pressure of 280 MPa. The pellet was then wrapped in a nickel net (100 mesh) and pressed again at 70 MPa. Thereafter a nickel wire was spot welded to the net for electrical connection. The counter electrode for the half-cell was a 20-mesh nickel net, which was also spot welded to a nickel wire for electrical connection. A 6 M potassium hydroxide solution was used electrolyte. A 3 mm zinc rod was used as reference electrode. A 60 mA/g charging current was applied. In order to study the discharge behavior at different c-rates, 60 mA/g, 300 mA/g, 600 mA/g, 1200 mA/g and 2400 mA/g currents were applied for discharging. For the low temperature tests at -20°C, a 300 mA/g discharge current was used (Figure 2).

The results for the different alloys A1 - A3 are given in Table 2 below, together with the material as obtained ("Alloy 1").

**TABLE 2**

| Half-cell performance tests | | | | | |
|---|---|---|---|---|---|
| Name | Discharge capacity at current 60mA/g (mAh/g) | Discharge capacity at current 300mA/g (mAh/g) | Discharge capacity at current 600mA/g (mAh/g) | Discharge capacity at current 1200mA/g (mAh/g) | Discharge capacity at current 2400mA/g (mAh/g) |
| Alloy 1 | 328 | 310 | 263 | 107 | 20 |
| A1 | 322 | 310 | 290 | 220 | 60 |
| A2 | 326 | 322 | 304 | 256 | 180 |
| A3 | 320 | 314 | 300 | 248 | 116 |

As is derivable from the above, the method of the present invention allows significantly increasing the discharge capacity, in particular at discharge currents of 600 mA/g or more, such as 1200 mA/g or 2400 mA/g. This shows that the method of the present invention, respectively the hydrogen storage alloy powder of the present invention, is particular useful for applications in which large discharge currents occur, such as in electric vehicles, hybrid vehicles or in stationary storage for e.g. renewable energies (e.g. wind or solar power).

## EXAMPLE 2

An $AB_5$ type alloy $La_{20} Ce_7 Pr_1 Nd_4 Al_2 Mn_5 Co_6 Ni_{55}$ (referred to as "Alloy 2") was supplied by Inner Mongolia Rare Earth Ovonic Metal Hydride Co. The indices refer to weight percent.
The alloy powder was treated in the same manner as described in Example 1. Again, different parts of the alloy powder were then washed with 30% hydrogen peroxide for 30 seconds (A4), 15% hydrogen peroxide for 30 seconds (A5) and 7.5% hydrogen peroxide for 30 seconds (A6), respectively. After that the powder was washed with deionized water and dried in vacuum.

Half-cell tests

The electrochemical properties of treated alloy were measured in a half-cell test as described in Example 1. The results are shown in Table 2:

**TABLE 2**

| Half-cell performance tests | | | | | |
|---|---|---|---|---|---|
| Name | Discharge capacity at current 60mA/g (mAh/g) | Discharge capacity at current 300mA/g (mAh/g) | Discharge capacity at current 600mA/g (mAh/g) | Discharge capacity at current 1200mA/g (mAh/g) | Discharge capacity at current 2400mA/g (mAh/g) |
| Alloy 2 | 328 | 312 | 294 | 235 | 125 |
| A4 | 314 | 306 | 300 | 272 | 208 |
| A5 | 316 | 303 | 292 | 251 | 186 |
| A6 | 314 | 314 | 300 | 264 | 175 |

The results show that at low to moderate discharge currents of up to 600 mA/g, the method of the present invention does not lead to an increase in discharge capacity. Yet, at higher discharge currents or 1200 mA/g or 2400 mA/g, again the discharge capacity is greatly improved by the method of the present invention.

**Claims**

1. A method for treating an hydrogen storage alloy powder for a negative electrode of a rechargeable NiMH battery, comprising

   A. optionally performing two or more cycles of a hydriding treatment to form a hydrided hydrogen storage alloy powder;
   B. optionally at least partially oxidizing the hydrided hydrogen storage alloy powder obtained after the two or more cycles of step A using an oxidizing agent;
   C. treating a hydrogen storage alloy powder, the hydrided hydrogen storage alloy powder obtained after the two or more cycles of hydriding treatment of step A or the partially oxidized hydrided hydrogen storage alloy powder obtained after step B with an aqueous solution containing hydrogen peroxide.

2. The method for treating a hydrogen storage alloy powder according to claim 1, wherein the hydrogen alloy powder contains nickel and optionally cobalt.

3. The method for treating a hydrogen storage alloy powder according to claim 1 or claim 2, wherein the hydrogen storage alloy powder is selected from the types $AB_2$, $AB_5$ and $A_2B_7$.

4. The method for treating an hydrogen storage alloy powder according to any one of claims 1 to 3, wherein the temperature of one or more of the two or more hydriding cycles of step A is 80°C or higher, preferably 90°C or higher, and/or wherein $P_{H_2}$ is $10^5$ Pa or higher, such as $5 \times 10^5$ Pa or higher or $10^6$ Pa or higher.

5. The method for treating a hydrogen storage alloy powder according to any one of claims 1 to 4, wherein the optional steps A and B are conducted, and wherein preferably the oxidizing agent used in step B comprises molecular oxygen, and is more preferably air.

6. The method for treating a hydrogen storage alloy powder according to any one of claims 1 to 5, wherein the aqueous solution of hydrogen peroxide used in step C has a hydrogen peroxide concentration of 35 wt.-% by weight or less, preferably 25 wt.-% or less, more preferably 20 wt.-% or less, but 1 wt.-% or more, preferably 2 wt.-% or more, more preferably 3 wt.-% or more.

7. The method for treating a hydrogen storage alloy powder according to any one of claims 1 to 6, which further comprises a milling step that is conducted prior to step C, and preferably prior to step A if step A is conducted or if steps A and B are conducted.

8. A hydrogen storage alloy having a discharge capacity of 150 mAh/g or more at a discharge current of 300 mA/g at -20°C.

9. A Nickel-Metal Hydride (NiMH) secondary battery cell having an electrode made from a composition comprising a hydrogen storage alloy according to claim 8 or a hydrogen storage alloy powder obtainable by a method according to any one of claims 1 to 6.

10. The NiMH secondary battery cell according to claim 9, which includes two electrodes, one of the electrodes being made from a composition comprising a hydrogen storage alloy according to claim 7 or a hydrogen storage alloy powder obtainable by a method according to any one of claims 1 to 6, a separator and an electrolyte, wherein the electrolyte is an aqueous alkaline solution comprising KOH and optionally LiOH and/or NaOH.

11. The NiMH secondary battery cell according to any one of claims 9 and 10, which has an n/p ratio of 1.05 - 2.2, preferably 1.4 - 2.2, and more preferably 1.8 - 2.2, wherein n denotes the capacity of the negative electrode and p denotes the capacity of the positive electrode.

12. A NiMH secondary battery cell having a discharge capacity of 290 mAh or higher at a discharge current of 600 mA/g.

13. The NiMH secondary battery cell according to claim 12, which is a NiMH secondary battery cell as defined in any one of claims 9 to 12.

14. A NiMH secondary battery containing one or more NiMH secondary battery cells as defined in any one of claims 9 to 13.

15. Use of the NiMH secondary battery according to claim 14 in a full electrical, hybrid electrical vehicle or in stationary storage.

Figure 1: Surface oxide diffusion layers obtained by a H2O2 treatment according to the present invention (top) and a conventional HAK treatment (bottom)

Figure 2: Half-cell tests at different temperatures for reference material (HAK) (top, Figure 2a); comparison of reference material (HAK) and inventive material at -20°C (bottom, Figure 2b)

2a)

2b)

Figure 3: Comparison of the discharge potential at 60 mA/g, and cycling stability of the hydrogen storage alloy of the present invention vs. untreated material

Europäisches
Patentamt

European
Patent Office

Office européen
des brevets

**EUROPEAN SEARCH REPORT**

Application Number

EP 18 19 6021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 219 368 A2 (MATSUSHITA ELECTRIC IND CO LTD [JP]; TOYOTA MOTOR CO LTD [JP]) 3 July 2002 (2002-07-03)<br>* figure 5 *<br>* paragraphs [0003], [0046], [0144] *<br>* example 1 *<br>* claims 1-15 * | 1-7, 9-11,14 | INV.<br>C22C1/04<br>H01M4/02<br>H01M4/24<br>H01M4/26<br>H01M4/38<br>H01M10/34 |
| X | US 2006/166099 A1 (OKABE KAZUYA [JP] ET AL) 27 July 2006 (2006-07-27)<br>* claims 1-23 *<br>* paragraphs [0010], [0054], [0065], [0086], [0087] * | 1-3,5-7, 9,10,14 | |
| X | US 2001/054458 A1 (KIKUYAMA SUSUMU [JP] ET AL) 27 December 2001 (2001-12-27)<br><br>* claims 1-17 *<br>* examples 1,3 *<br>* paragraph [0004] * | 1,2,6,7, 9,10,14, 15 | |
| X | US 2013/042466 A1 (WU AISHEN [CN]) 21 February 2013 (2013-02-21)<br>* examples 1,2 *<br>* paragraphs [0002], [0007] *<br>* claims 1-8 * | 1-3,6,9, 10,14,15 | TECHNICAL FIELDS SEARCHED (IPC)<br>C22C<br>H01M |

-/--

~~The present search report has been drawn up for all claims~~

| Place of search | Date of completion of the search | Examiner |
|---|---|---|
| The Hague | 20 February 2019 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUNG K ET AL: "Effects of HOaddition to the cell balance and self-discharge of Ni/MH batteries with ABand ABalloys", INTERNATIONAL JOURNAL OF HYDROGEN ENERGY, ELSEVIER SCIENCE PUBLISHERS B.V., BARKING, GB, vol. 37, no. 12, 22 March 2012 (2012-03-22), pages 9882-9891, XP028487477, ISSN: 0360-3199, DOI: 10.1016/J.IJHYDENE.2012.03.117 [retrieved on 2012-03-28] * page 9884, column 1, paragraph 2 * * page 9887, column 2 - page 9890, column 1 * ----- | 1-3,9, 10,14 | |

TECHNICAL FIELDS
SEARCHED      (IPC)

~~The present search report has been drawn up for all claims~~

| Place of search | Date of completion of the search | Examiner |
|---|---|---|
| The Hague | 20 February 2019 | Reich, Claus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...............................................................................
& : member of the same patent family, corresponding
document

EPO FORM 1503 03.82 (P04C01)

Europäisches
Patentamt

European
Patent Office

Office européen
des brevets

Application Number

EP 18 19 6021

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7(completely); 9-11, 14, 15(partially)

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 18 19 6021

The Search Division considers that the present European patent application does not comply with the requirements of unity of invention and relates to several inventions or groups of inventions, namely:

1. claims: 1-7(completely); 9-11, 14, 15(partially)

   A method for treating an hydrogen storage alloy powder for a negative electrode of a rechargeable NiMH battery, comprising treating a hydrogen storage alloy powder with an aqueous solution containing hydrogen peroxide.
   A Nickel-Metal Hydride secondary battery cell having an electrode made from a composition comprising the hydrogen storage alloy powder obtained by said method.
   ---

2. claims: 8(completely); 9-11, 14, 15(partially)

   A hydrogen storage alloy having a discharge capacity of 150 mAh/g or more at a discharge current of 300 mA/g at -20°C.
   ---

3. claims: 12, 13(completely); 14, 15(partially)

   A NiMH secondary battery cell having a discharge capacity of 290 mAh or higher at a discharge current of 600 mA/g.
   ---

## ANNEX TO THE EUROPEAN SEARCH REPORT
## ON EUROPEAN PATENT APPLICATION NO.

EP 18 19 6021

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2019

| Patent document cited in search report | | Publication date | Patent family member(s) | | Publication date |
|---|---|---|---|---|---|
| EP 1219368 | A2 | 03-07-2002 | CN 1362751 A | | 07-08-2002 |
| | | | DE 60132549 T2 | | 19-02-2009 |
| | | | EP 1219368 A2 | | 03-07-2002 |
| | | | KR 20020054268 A | | 06-07-2002 |
| | | | US 2002122982 A1 | | 05-09-2002 |
| US 2006166099 | A1 | 27-07-2006 | JP 4678130 B2 | | 27-04-2011 |
| | | | JP 2004247288 A | | 02-09-2004 |
| | | | US 2006166099 A1 | | 27-07-2006 |
| | | | WO 2004066421 A1 | | 05-08-2004 |
| US 2001054458 | A1 | 27-12-2001 | CN 1234620 A | | 10-11-1999 |
| | | | DE 69916921 T2 | | 07-04-2005 |
| | | | EP 0944124 A1 | | 22-09-1999 |
| | | | JP 2982805 B1 | | 29-11-1999 |
| | | | JP H11339793 A | | 10-12-1999 |
| | | | US 2001054458 A1 | | 27-12-2001 |
| US 2013042466 | A1 | 21-02-2013 | NONE | | |

EPO FORM P0459

For more details about this annex : see Official Journal of the European Patent Office, No. 12/82

## REFERENCES CITED IN THE DESCRIPTION

**Patent documents cited in the description**

- WO 0189009 A1
- US 4716088 A

- WO 0189009 A

**Non-patent literature cited in the description**

- **K. YOUNG et al.** *Int. J. Hydrogen Energy,* 2012, vol. 37 (12), 9882-9891
- **DUNLAP et al.** *J. of the Less Common Metals,* 1983, vol. 91, 1-20
- **WANG et al.** *Chem. Eng. J.,* 2018, vol. 352, 325-332
- *J. Power Sources,* 2018, vol. 398, 42-48

- Battery Technology Handbook. Expert Verlag GmbH, Renningen-Malsheim, 2003
- **D.R. BAER ; M.H. ENGELHARD ; A.S. LEA ; P. NACHIMUTHU ; T.C. DROUBAY ; J. KIM ; B. LEE ; C. MATHEWS ; R.L. OPILA ; L.V. SARAF.** *J. Vac. Sci. Technol. A,* 2010, vol. 28, 1060-1072